# EUROPEAN PATENT SPECIFICATION

(11) **EP 1 098 073 B1**
(45) Date of publication and mention of the grant of the patent: **13.12.2006**
(21) Application number: 00203695.2
(22) Date of filing: 24.10.2000
(51) Int. Cl.: F01P 3/18, F01P 11/08

(54) **Motor vehicle having an oil cooler**
Kraftfahrzeug mit einem Ölkühler
Véhicule automobile avec un refroidisseur d'huile

(30) Priority: 05.11.1999 AT 186999
(43) Date of publication of application: 09.05.2001
(73) Proprietor: CNH Österreich GmbH, 4300 St. Valentin (AT)
(72) Inventor: Pfusterschmid, Johann, 4432 Ernsthofen (AT)
(74) Representative: Vandenbroucke, Alberic

(56) References cited:
- JP-U- 3 092 525
- US-A- 3 297 080
- US-A- 3 334 704
- PATENT ABSTRACTS OF JAPAN vol. 1999, no. 08, 30 June 1999 (1999-06-30) -& JP 11 082023 A (HITACHI CONSTR MACH CO LTD), 26 March 1999 (1999-03-26)
- PATENT ABSTRACTS OF JAPAN vol. 2000, no. 19, 5 June 2001 (2001-06-05) -& JP 2001 041043 A (SHIN CATERPILLAR MITSUBISHI LTD), 13 February 2001 (2001-02-13)

## Description

The present invention relates to a motor vehicle having an oil cooler disposed in front of a radiator as seen in the direction of flow of the cooling medium therethrough, said radiator having an inflow and an outflow surface, two side surfaces as well as top and bottom surfaces.

Oil coolers are used in conjunction with motor vehicles for cooling the motor oil and/or the transmission oil. With utility vehicles, and especially agricultural vehicles, they are also used to cool the operating fluid of lifting devices or other systems. In most cases, these oil coolers are disposed immediately in front of or behind the radiator and parallel thereto, depending on whether the cooling fan is disposed in front of or behind the radiator.

To maintain the cooling efficiency of an oil cooler at an acceptable level, even in a contaminated environment, it has to be cleaned periodically. This is usually done by blowing air or a liquid through the oil cooler in a direction opposite to the direction of flow of the cooling medium during normal operation. For this purpose, the oil cooler has to be moved sufficiently far away from the radiator so that it is accessible from the rear side, especially when it is mounted in front of the radiator.

In most cases it will be necessary to uninstall the oil-cooler, involving a substantial expense of time. From the STEYR-tractors of the series 91, and also as shown in JP-U-03.092.525, it is known to pivot the oil cooler in its own plane parallel to the inflow surface about an axis extending along the direction of flow of the cooling medium. Said JP-U - document discloses an oil cooler for a motor vehicle which is disposed in front of a radiator as seen in the direction of flow of a cooling medium, said radiator having an inflow and an outflow surface, two side surfaces, and a top and bottom surface , and is pivotably mounted to one of the side surface of the radiator by means of hinges and may be pivoted away from said radiator. However, since the coolers are installed in a vehicle, this pivotal movement is possible only in a limited manner such that a portion of the surface to be cleaned always will remain inaccessible. The pivotal movement is not only limited by the wheels and the frame of the vehicle but also - in the case of an agricultural utility vehicle - also by the front lift device or by the ballast weights.

It is therefore an object of the invention to propose an arrangement of the oil cooler which allows an unimpaired access to the complete surface to be cleaned with a minimum of time and constructional expenses.

For this purpose and in accordance with the invention, the oil cooler is pivotably mounted as defined in claim 1.

According to a preferred embodiment of the invention, said angle is an acute angle directed relative to a vertical line in a combined forward and downward direction. On pivoting away, the oil cooler therefore initially follows a path directed upwardly such that it avoids obstacles in front of it. Such obstacles may be: frame portions, a bumper, parts of the front lift device, or ballast weights.

A non-limiting embodiment of the present invention will now be described by way of example with reference to the accompanying drawings, in which:
Figure 1 is a perspective view showing the subject of the present invention in a first position; and
Figure 2 is a view similar to Figure 1 but showing the subject of the invention in a second position under a different angle of view.

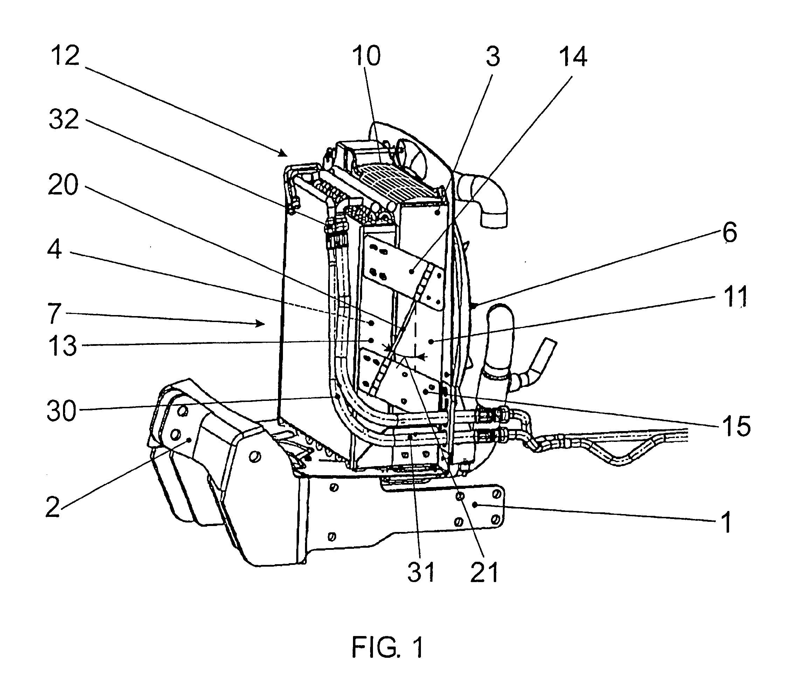

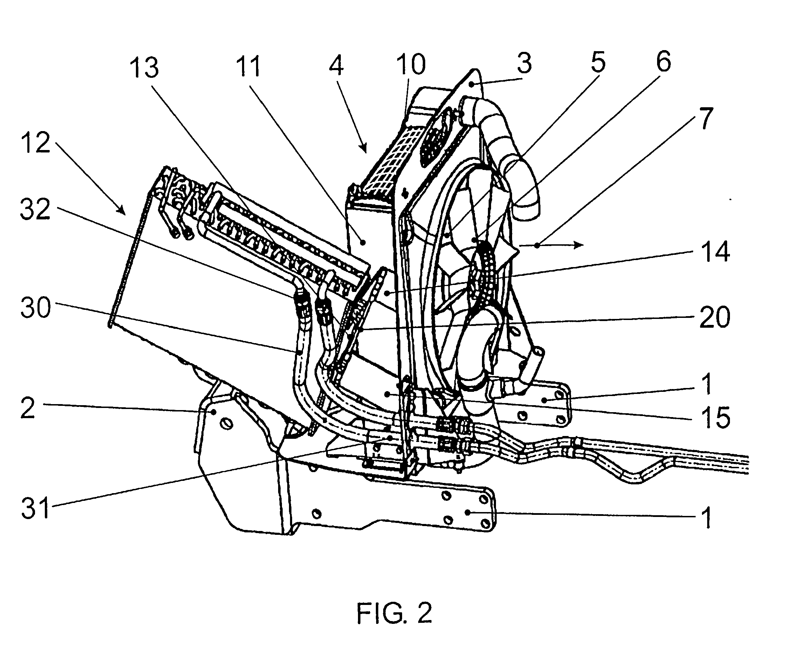

In Figure 1, the chassis or frame of a vehicle is only partly shown and indicated with reference number 1. This may represent the vehicle chassis, a front axle support body, or the support of a lifting unit. In the last mentioned case, the frame itself is not shown. This frame 1 ends at its front end in a head portion 2 which equally well may be a portion of the body of a vehicle, the bumper, or a support for the ballast weights. A radiator 8 or water cooler is fixedly mounted to this frame 1. The radiator is a plane, flat box having an inflow surface 4 (hidden) and an outflow surface 5 (see figure 2) which is partly hidden by a radiator cowling. In the embodiment shown, the plane of the inflow and outflow surfaces 4, 5 extends vertically, but it also might be inclined. A cooling fan 6 (see Fig. 2) is disposed in the cowling and provides a flow of the cooling medium (in the present case ambient air) along a direction as indicated by reference number 7.

Between its inflow surface 4 and outflow surface 5, the radiator 3 is surrounded by top and bottom surfaces and side surfaces, only one top surface 10 and one side surface 11 being visible. In front of the radiator 3, i.e. in upstream direction relative to the direction of flow 7, an oil cooler 12 is provided. The oil cooler is also a flat box extending mainly in a plane parallel to the inflow surface 4 of the radiator. Also only one side surface 13 of the oil cooler may be seen in the drawings. In Figure 1, the oil cooler is disposed in the operational position.

The side surface 13 of the oil cooler 12 and the side surface 11 of the radiator 3 are disposed in the same plane and are pivotally connected with one another by means of two hinges 14, 15 having flanges welded or bolted to the two side surfaces 11, 13. The hinge axis indicated at 20 is disposed in a vertical plane wherein it is inclined under an angle 21 in a combined forward and downward direction.

The oil cooler 12 is connected via flexible oil tubes 30 and oil pipes 31 to the components to be cooled (engine, transmission and so on). The flexible oil tubes 30 are provided between the oil pipes 31 guided along the radiator 3 and fittings 32 arranged on the oil cooler 12, respectively.

Figure 2 shows the same arrangement in the cleaning position. The oil cooler 12 has been pivoted away from the radiator 3 over nearly a square angle about the hinge axis 20. As a result of the inclined installation of the hinge axis 20, the oil cooler 12 is no obstructed in its pivotal movement by the head portion 12. It is now possible to clean the oil cooler 12 on its exposed side by thoroughly blowing through it over its full surface. The flexible oil tubes 30 may accommodate the pivotal movement of the oil cooler 12 without any problem and without any substantial change of their position. If the oil cooler 12 is then pivoted back into its operational position according to Figure 1, it may be fixed in this position by means of a latch or catch or similar means not shown.

## Claims

1. An oil cooler (12) for a motor vehicle which is disposed in front of a radiator (3) as seen in the direction of flow of a cooling medium, said radiator (3) having an inflow and an outflow surface (4, 5), two side surfaces (11), and a top and bottom surface (10), and said oil cooler (12) being pivotably mounted to one of the side surfaces (11) of the radiator (3) by means of at least one hinge (14, 15) and may be pivoted away from said radiator (3); and
**characterized in that** the hinge axis (20) of said at least one hinge (14, 15) is inclined by an angle (21) relative to a vertical line between said radiator (3) and said oil cooler (12) such that, upon pivoting away, the oil cooler (12) initially follows a path directed upwardly thereby avoiding obstacles in front of it.

2. An oil cooler according to claim 1, **characterized in that** said angle (21) is an acute angle directed in a combined forward and downward direction relative to the vertical line between said radiator (3) and said oil cooler (12).

3. An oil cooler according to any of the preceding claims, **characterized in that** at least part of the oil conducts (30, 31) leading oil to and from the oil cooler (12) are flexible.

4. A motor vehicle **characterized in that** it comprises an oil cooler (12) in accordance with any of the preceding claims.

5. A motor vehicle according to claim 4, **characterized in that** a vehicle chassis part (2) is located in close proximity in front of said cooler (12) as seen in the flow direction of the cooling medium through the cooler (12) and comprises a top portion which extends above the bottom surface of the cooler; said at least one hinge (14, 15) being arranged such that, upon pivoting the cooler (12) away from the radiator (3), part of the cooler (12) is lifted to procure unobstructed passage of at least part of the cooler (12) over and above said top portion of the vehicle chassis part (2).

## Patentansprüche

1. Ölkühler (12) für ein Motorfahrzeug, der vor einem Kühler (3) bei Betrachtung in Richtung der Strömung eines Kühl-Mediums angeordnet ist, wobei der Kühler (3) eine Einström- und eine Ausström-Oberfläche (4, 5), zwei Seitenflächen (11) und eine obere und untere Oberfläche (10) aufweist, und wobei der Ölkühler (12) schwenkbar an einer der Seitenflächen (11) des Kühlers (3) mit Hilfe von zumindest einem Scharnier (14, 15) befestigt und von dem Kühler (3) fort verschwenkbar ist, und
**dadurch gekennzeichnet, dass** die Scharnierachse (20) des zumindest einem Scharniers (14, 15) unter einem Winkel (21) gegenüber einer vertikalen Linie zwischen dem Kühler (3) und dem Ölkühler (12) derart geneigt ist, dass beim Fortverschwenken der Ölkühler (12) anfänglich einer Bahn folgt, die nach oben gerichtet ist, wodurch Hindernisse an seiner Vorderseite vermieden werden.

2. Ölkühler nach Anspruch 1, **dadurch gekennzeichnet, dass** der Winkel (21) ein spitzer Winkel ist, der in einer kombinierten Vorwärts- und Abwärts-Richtung gegenüber der vertikalen Linie zwischen dem Kühler (3) und dem Ölkühler (12) gerichtet ist.

3. Ölkühler nach einem der vorhergehenden Ansprüche, **dadurch gekennzeichnet, dass** zumindest ein Teil der Ölleitungen (30, 31), die Öl zu dem Ölkühler (12) und von diesem fort leiten, flexibel sind.

4. Motorfahrzeug, **dadurch gekennzeichnet, dass** es einen Ölkühler (12) nach einem der vorhergehenden Ansprüche umfasst.

5. Motorfahrzeug nach Anspruch 4, **dadurch gekennzeichnet, dass** ein Fahrzeug-Fahrgestell-Teil (2) in enger Nähe zum vorderen Ende des Ölkühlers (12) bei Betrachtung in der Strömungsrichtung des Kühl-Mediums durch den Ölkühler (12) angeordnet ist und einen oberen Teil aufweist, der sich oberhalb der unteren Oberfläche des Ölkühlers erstreckt; wobei das zumindest eine Scharnier (14, 15) derart angeordnet ist, dass beim Verschwenken des Ölkühlers (12) von dem Kühler (3) fort ein Teil des Ölkühlers (12) angehoben wird, um einen unbehinderten Durchgang von zumindest einem Teil des Ölkühlers (12) über den und oberhalb des oberen Teils des Fahrzeug-Fahrgestell-Teils (2) sicherzustellen.

## Revendications

1. Radiateur à huile (12) pour un véhicule automobile monté devant un radiateur (3) tel qu'on le voit dans la direction de circulation du produit réfrigérant, ledit radiateur (3) étant constitué par une surface d'entrée (4), une surface de sortie (5), deux surfaces latérales (11), ainsi que par une surface supérieure et une surface inférieure (10), et qui est monté, de manière à pivoter, sur l'une des surfaces latérales (11) du radiateur (3) au moyen d'au moins une charnière (14, 15) et qui peut être séparé dudit radiateur (3) par un mouvement de pivotement ; et
**caractérisée en ce que** l'axe d'articulation (20) d'au moins une charnière (14, 15) est incliné d'un certain angle (21) par rapport à une ligne verticale entre ledit radiateur (3) et ledit radiateur à huile (12) de sorte que, en pivotant pour se séparer, le radiateur à huile (12) est tout d'abord déplacé vers le haut, ce qui lui permet d'éviter les obstacles se trouvant devant lui.

2. Radiateur à huile selon la revendication 1, **caractérisé en ce que** ledit angle (21) est un angle aigu allant dans une direction combinée vers l'avant et vers le bas par rapport à la ligne verticale tracée entre ledit radiateur (3) et ledit radiateur à huile (12).

3. Radiateur à huile selon l'une quelconque des revendications précédentes, **caractérisé en ce qu'**au moins une partie des tubulures à huile (30, 31) qui dirigent l'huile vers le radiateur à huile (12) et depuis ce dernier est souple.

4. Véhicule automobile **caractérisé en ce qu'**il comporte un radiateur à huile (12) conforme à chacune des revendications qui précèdent.

5. Véhicule automobile suivant la revendication 4, **caractérisé en ce qu'**une partie du châssis du véhicule (2) est située directement devant ledit radiateur à huile (12) tel qu'on le voit dans la direction de circulation du produit réfrigérant à travers le radiateur à huile (12) et comporte une partie supérieure qui s'étend au-dessus de la surface inférieure du radiateur à huile ; au moins une charnière (14, 15) est disposée de façon à ce que, en faisant pivoter le radiateur à huile (12) pour le séparer du radiateur (3), une partie du radiateur à huile (12) est soulevée pour laisser le passage libre à au moins une partie du radiateur (12) sur et au-dessus de ladite partie supérieure de la partie du châssis du véhicule (2).
